# EUROPEAN PATENT SPECIFICATION

(11) **EP 3 933 695 B1**
(45) Date of publication and mention of the grant of the patent: **06.05.2026**
(21) Application number: 19917123.2
(22) Date of filing: 12.07.2019
(51) Int. Cl.: G06K 19/06, G06K 7/14, G09B 21/00

(54) **PRINTED MATTER WITH IDENTIFICATION CODE FOR VISUALLY IMPAIRED PERSONS ADDED**
DRUCKSACHE MIT HINZUGEFÜGTEM IDENTIFIKATIONSCODE FÜR SEHBEHINDERTE PERSONEN
MATIÈRE IMPRIMÉE À LAQUELLE EST AJOUTÉ UN CODE D'IDENTIFICATION POUR PERSONNES MALVOYANTES

(30) Priority: 26.02.2019 JP 2019032403
(43) Date of publication of application: 05.01.2022
(73) Proprietor: Export Japan Inc., Chuo-ku, Osaka-Shi (JP)
(72) Inventor: TAKAOKA,Kenji, Osaka-Shi, Osaka 540-0003 (JP)
(74) Representative: Franke, Dirk
(86) International application number: PCT/JP2019/027661
(87) International publication number: WO 2020/174714

(56) References cited:
- JP-A- 2016 003 049
- JP-A- 2016 157 262
- JP-A- 2018 165 745
- JP-A- H0 584 970
- JP-U- 3 152 955
- JP-U- 3 211 133
- US-A1- 2016 019 817

## Description

### Technical Field

The present invention relates to product packaging with an identification code specifically for people with visual impairments so that visually impaired people can easily access and understand the information written on the product or printed material.

### Background Technology

Visually impaired people are often at a disadvantage in their daily lives because of the limited amount of information they can obtain from non-audible sources. In the past, excluding audible sources, visually impaired people mainly acquired information through Braille, and it was difficult to acquire information from items that did not have Braille on them. In addition, each country has its own system of Braille and writes it according to their system, and this, combined with the difficulty of writing Braille side by side, has become a hindrance for visually impaired people to obtain information overseas and purchase foreign products. Furthermore, when visually impaired tourists come from other countries, the means of providing information to them are very limited.

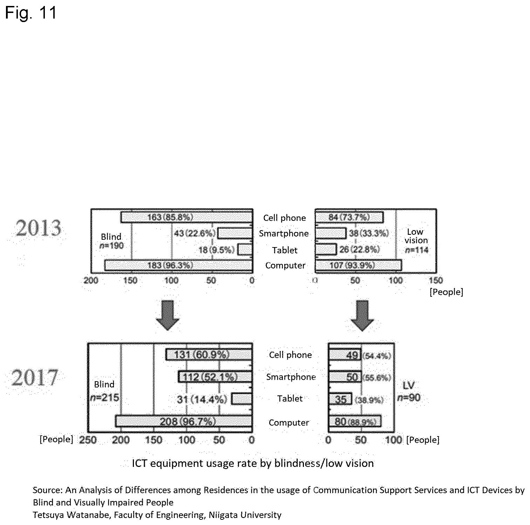

In addition, it is said that only about 10% of people with visual impairments have a complete understanding of Braille, and there is an overwhelming lack of methods for providing information to visually impaired people, especially those who acquire visual impairments. On the other hand, in recent years, there has been an increase in the number of visually impaired people who use the voice reading functions (VoiceOver and TalkBack) and related applications of mobile phones and devices to access and understand text posted on the internet by converting it into spoken information. (See Patent Reference 1, Non-Patent Reference 1, Non-Patent Reference 2, and Figure 11). With this change, the amount of information available to the visually impaired, including those who cannot understand Braille, is greatly increasing.

In addition, since automatic translation functions (Patent Document 2) are originally included in smartphone applications or can be installed later, there are visually impaired people who utilize these functions to translate documents written in foreign languages and use the above-mentioned read-aloud function to obtain information audibly.

However, even for visually impaired people who utilize the text-to-speech function of smartphones, it is still difficult to recognize non-digitized information on the internet through read-aloud technology. For example, product descriptions, ingredients, expiration dates, etc., on the packaging of products manufactured overseas are written in foreign languages, and although a portion of these products may be translated, it is difficult for the visually impaired to understand them. This is not limited to foreign products, as it is difficult to put Braille on various generic products or on ordinary printed matter even in one's own language, and it is also difficult for visually impaired people to immediately understand detailed information on products or information on printed matter when shopping or reading.

There are, however, known methods of printing an identification code (2D code) on a published text and providing the document to a mobile device, such as a smartphone, that can decode the identification code using an identification code reading application. Among these methods, for example, Patent Document 3 describes the idea of displaying a 2D code on a document and using this 2D code to obtain a written or spoken translation of that document from the internet. In addition, in Patent Reference 4, the inventor provides a technology for a mobile device to read a 2D code on a document or the like posted in a public space, etc., and to display a translated version of that text in the language set on the mobile device.

However, none of them are specifically intended for visually impaired people, and they are made to read identification codes such as two-dimensional codes when purchasing products and reading books for visually impaired people so that they can understand the contents of products and information in printed matter. It has not yet provided the best mode and its effectiveness to society.

### Prior Technology References

### Patent References

Patent Reference 1: Patent No. 4011095
Patent Reference 2: Patent No. 6443689
Patent Reference 3: Patent Publication No. 2009-157894
Patent Reference 4: Patent No. 4918174

### Non-Patent References:

Non-Patent Reference 1: Watanabe Tetsuya 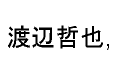 , Yamaguchi Toshimitsu 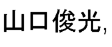 , & Minatani Kazunori 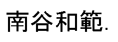 . (2014). Kenkyu̅ ho̅kokusho̅ No.29 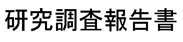 No.29. "Shikakusho̅gaisha no keitaidenwa riyo̅ jo̅kyo̅ cho̅sa 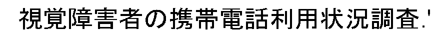 ." The Telecommunications Advancement Foundation.
Non-Patent Reference 2: Watanabe, T. (2017). An Analysis of Differences among Residences in the usage of Communication Support Services and ICT Devices by Blind and Visually Impaired People. Journal of the National Institute of Public Health, Vol.66, No.5, pp.523-531.

Moreover, the Japanese patent application No. JP 2016 003049 A discloses a resin molding capable of making a visible mode of identification information clearer. Further, the Japanese patent application No. JP H05 84970 A discloses a container wherein a barcode is integrally formed in a recessed part at the bottom surface of the container.

### Overview of the Invention

### Problem to be Solved by the Invention

The present invention has been created in view of the above circumstances, and its purpose is to provide product packaging, such as paperboard boxes, with identification codes for visually impaired people that can be scanned using mobile devices, such as smartphones, so that the visually impaired person can easily access and understand the product's information and contents.

### Means to Solve the Problem

The present invention has been created to achieve the above object. The invention relates to a product packaging as specified in claim 1.

Furthermore, the present invention is a product packaging which printed etc. an identification code for visually impaired people (bar code or data matrix 2D code), in order for the visually impaired people to access and understand the product information ingested by the visually impaired people is handled by a hand. With the present invention, in order to resolve the issue that the product information printed on the product packaging cannot be accessed when a visually impaired person purchases a product at a mass retailer etc., as described above, the identification code for visually impaired people is printed on the product packaging. Additionally, the identification code for visually impaired people may be printed on a recess having a square-shaped bottom surface provided on the product packaging.

The inventor has conducted various proof of concept tests, and the presence of the code can be immediately detected, while still ensuring the usability of the code as an identification code for visually impaired people that can be read by at least a generic camera and a generic 2D code reader, by placing the entire identification code for visually impaired people in a recess (a square-shaped concave area) on the surface of the product packaging.

The said 2D code is preferably a square measuring at least 10 mm or more.

For 2D codes for visually impaired people, a smaller printing space is desirable in consideration of the extra space on product packaging, conversely, from the viewpoint of increasing the success rate of reading 2D codes, the 2D codes needs to be larger than the specified size. From the results of the test described later, the size of the code is preferably 10.0 mm or more in order to maintain a high reading success rate of the 2D code.

In this case as well, from the results of the test, it is desirable that each side of the 2D code is 10 mm or more in length, and each side of the bottom of the concave recess is larger than each side of the 2D code so as not to overlap with the 2D code.

Additionally, if the printed material bears an identification code for visually impaired people to help them to understand the information printed on the packaging of the 3D object or the contained product's information, when a visually impaired person scans the identification code for visually impaired people with their mobile device, a web page containing detailed information on the product (3D object) is displayed. Ideally, the visually impaired person can thereby receive spoken detailed information on the product through the voice reading function of their mobile device.

When the identification code for visually impaired people is the printed packaging of a product (3D object), the address (URL) of the page containing detailed information on the product is recorded in the identification code for visually impaired people. The visually impaired person can scan the identification code for visually impaired people with the code reading function of a mobile device, such as a smartphone, to access the page, and then use the voice reading function of the mobile device to read aloud the page, enabling the visually impaired person to access detailed information on the product. Therefore, by utilizing the present invention, the desired information, such as ingredients in food items, can be easily understood by ear when purchasing products at mass retailers. It is also advantageous for product manufacturers to be able to communicate detailed product information appropriately to visually impaired people simply by creating the relevant page on their website, without having to add special displays or functions, or request that individual mass retailers accommodate visually impaired customers.

### Effectiveness of the Invention

According to the product packaging to which the identification code for visually impaired people of the present invention is attached, a 2D code indicating information on the contents of the product is printed on the surface of the product packaging, and the convex portions surrounding the 2D code at predetermined intervals or the concave recess that contains the entire 2D code on the bottom allows a visually impaired person who picks up the product to quickly recognize the existence of the identification code for visually impaired people containing a 2D code, and easily read the code with a mobile device such as a smartphone. As a result, the product's contents and information can be quickly and easily understood on site.

### Brief Description of the Drawing

Figure 1: The test objects used in proof of concept Test 1: (1) four pieces of paper for the test, and one 2D code is printed on each piece of paper in the top left, top right, bottom left, and bottom right corners respectively. Each code is the same size. (2) four types of products purchased at a mass retailer, each of which has a 2D code printed on it, with convex marks around the code so that the location of the 2D code can be recognized by touch. Furthermore, we also prepared unmarked products for two of the product types for comparison.
Figure 2A: The breakdown of participants. (a) shows the breakdown of male and female participants and (b) shows the breakdown of participants in terms of their level of vision (blind or low vision) in Test 1.
Figure 2B: The percentage of participants with visual impairments in Test 1 who have experience using various items. (c) shows the percentage of people who use Braille, (d) shows the percentage of people who have used smartphones, and (e) shows the percentage of people who have used 2D codes.
Figure 3A: (a) and (b) show the number of people (out of 100) who succeeded in reading the 2D codes printed in each position on the paper in Fig. 1(1) within one minute before and after being given instructions, respectively, during Test 1. (c) shows the breakdown of the success rate of reading 2D codes on products purchased at a mass retailer in Fig. 1(2) (six types of 3D objects classified by the presence or absence of tactile recognition marks and by shape).
Figure 3B: (d) and (e) show the number of people who succeeded in reading the 2D code within one minute on products shown in Fig. 1(2) that were purchased from a mass retailer during Test 1. The same products were used, only differing in terms of whether the 2D code was marked with a tactile recognition mark or not. (f) shows the percentage of people who succeeded in reading the 2D code within one minute according to the shape of the product (3D object).
Figure 4A: The objects used in proof of concept Test 2. (1) shows test papers (A4 size paper with a 2D code of about 1.4 cm length printed on the bottom right side) both with and without a cut on the lower right corner; (2) shows test papers (A4 size paper) with a cut and with a 2D code of 0.6 cm, 0.8 cm, 1.0 cm, and 1.2 cm respectively printed on them.
Figure 4B: The objects used in Test 2. (3) shows two types of products (printed product packaging) printed with 2D codes (rectangular and cylindrical). In total, eight variations of 2D code placements were prepared. They are, respectively, rectangular (without mark), rectangular (convex), rectangular (concave), rectangular (with convex points), rectangular (with seal), cylindrical (without mark), cylindrical (with seal), and cylindrical (with convex points).
Figure 5A: The breakdown of participants. (a) shows the breakdown of male and female participants and (b) shows the breakdown of participants in terms of their level of vision (blind or low vision) in Test 2.
Figure 5B: The percentage of participants with visual impairments in Test 2 who have experience using various items. (c) shows the percentage of people who use Braille, (d) shows the percentage of people who use smartphones, and (e) shows the percentage of people who have used 2D codes.
Figure 6: A breakdown of results of Test 2. (a) shows the breakdown of the success rate (within one minute) of reading the 2D code of the printed material on the right-hand side in Fig. 4A(1) in which a 2D code of 14 mm x 14 mm is printed on the lower right side and the lower right edge of the paper is cut diagonally. (b) shows the breakdown of the success rate (within one minute) of reading the 2D code of the printed material on the left-hand side of FFig. 4A(1)n which a 2D code of 14 mm x 14 mm is printed on the lower right side but the is lower edge is not cut.

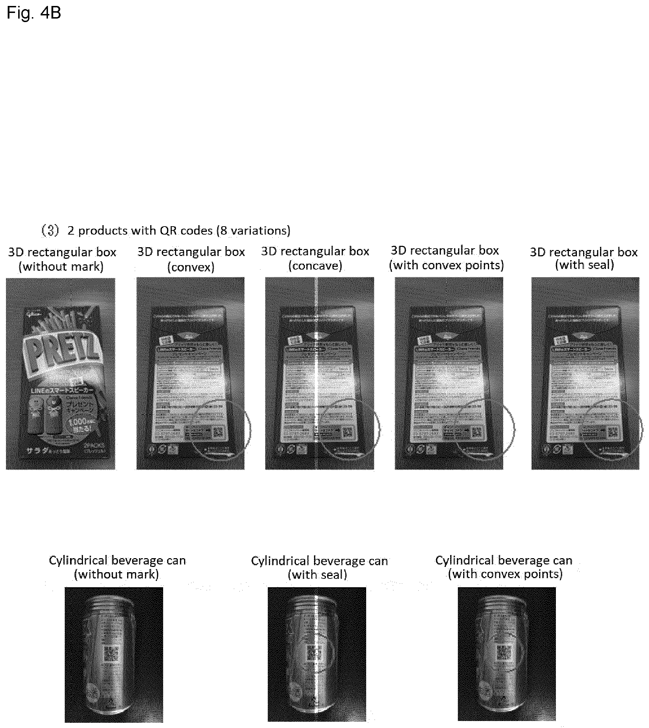

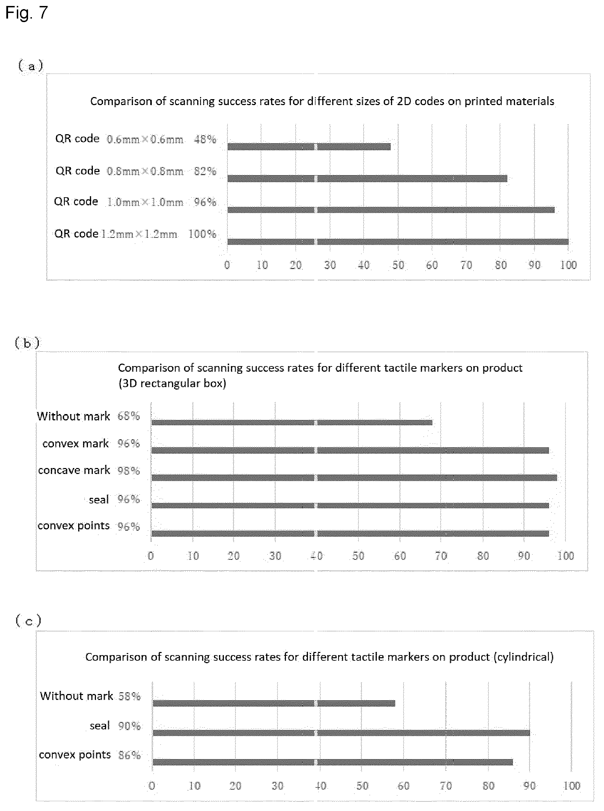

Figure 7: A breakdown of results of Test 2. (a) is a breakdown of the success rate (within one minute) of reading the 2D code when 2D codes of 0.6 cm, 0.8 cm, 1.0 cm, and 1.2 cm length were randomly printed on the demonstration paper (A4 size) with any cutouts as shown in Fig. 4B(2). (b) is the breakdown of the success rate (within one minute) of reading the 2D code when the 2D code printed on the product (rectangular product packaging) in Fig. 4B(3) was randomly presented with different tactile recognition marks. (c) is the breakdown of the success rate (within one minute) of reading the 2D code when the 2D code printed on the product (cylindrical product packaging) in Fig. 4B(3) was randomly presented with different tactile recognition marks.
Figure 8: An example of a 2D code for use by visually impaired people as an model of the present invention.
Figure 9: (a) is a schematic diagram of the cross-sectional shape of each convex point, (b) is its dimensions, and (c) is a cross-section of standard Braille raised dots. (Source: Kizuka, Y. (1998). Size and feeling of braille: Nihonno Tenji, No.23, pp.19-23.)
Figure 10: List of distances from center to center of Braille raised dots in each country's Braille systems. (Source: Kizuka, Y. (1998). Size and feeling of braille: Nihonno Tenji, No.23, pp.19-23).
Figure 11: Trends in the utilization rates of various ICT devices from the past (2013) to the present (2017) for visually impaired people by total blindness/low vision (see Non-Patent Reference 1 and Non-Patent Reference 2).

### Form of Implementing the Invention

Implementation of the present invention will be described in detail below with reference to diagrams.

First, we will explain data matrix 2D codes (also known as "QR codes," registered trademark No. 4075066) as identification code images to be read as identification codes for visually impaired people. (Hereinafter, "identification code" is referred to as "2D code" as a typical example.) There are various problems in terms of recognizing a 2D code attached to a product. The inventor has conducted various tests to determine the problems that visually impaired people face. An example of a test conducted is outlined below as a premise for explaining the implementation of the present invention.

### Proof of Concept Test 1 (conducted between August 3, 2017, and March 16, 2018)

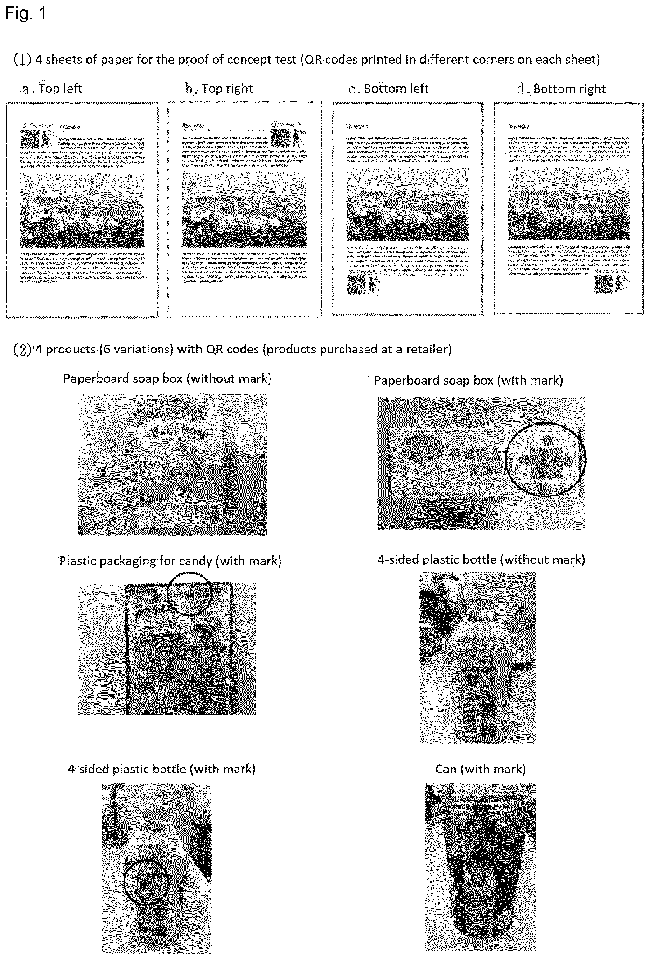

In Test 1, participants were seated in a well-lit room and used their smartphones (with a 2D code reading application installed) to scan the test objects placed on the specified table. Each object had a 2D code printed on it in a different location. The objects for the test were four sheets of test paper with 2D codes printed in different positions, as shown in Fig. 1(1), and four 3D products purchased from mass retailers with 2D codes printed in various positions, as shown in Fig. 1(2), with two of those products having tactile protrusions around the 2D codes and two products having no tactile markers. In total, six types of items were prepared. The assistants, seated next to participants, were asked to use a stopwatch to measure the time required to successfully read the code and record how participants scanned the code. We also measured the amount of time it took to scan the code both before and after receiving instructions on scanning 2D codes. (It becomes easier to read the code if the smartphone camera is held 20-40 centimeters above the object and the camera is steadied, for example, by resting the smartphone against one's chin.) Four products are shown in Fig. 1(2): baby soap (six-sided box), gummy candy (bag with varying concave-convex shapes), aojiru green juice (four-sided plastic bottle), and a canned alcoholic beverage (cylindrical aluminum can).

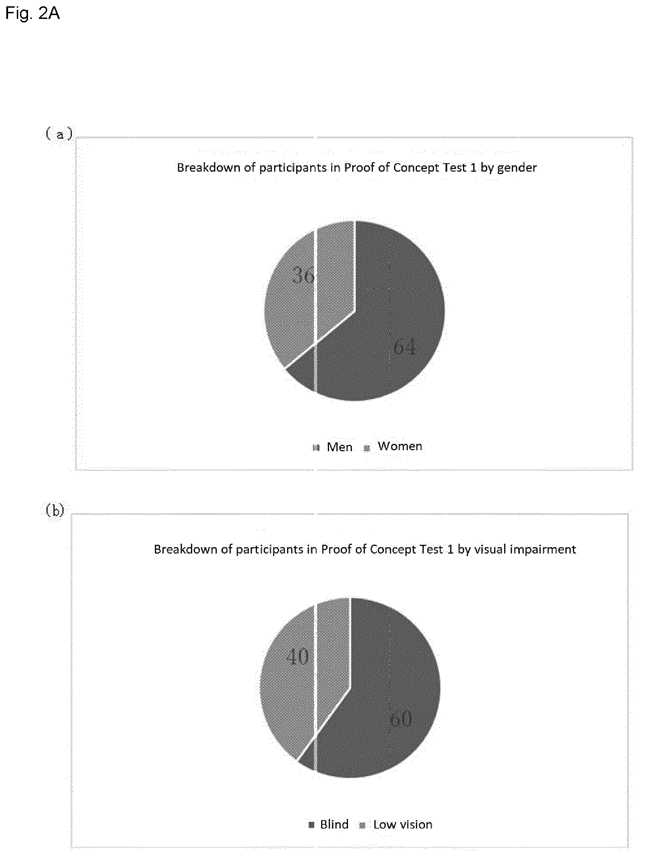

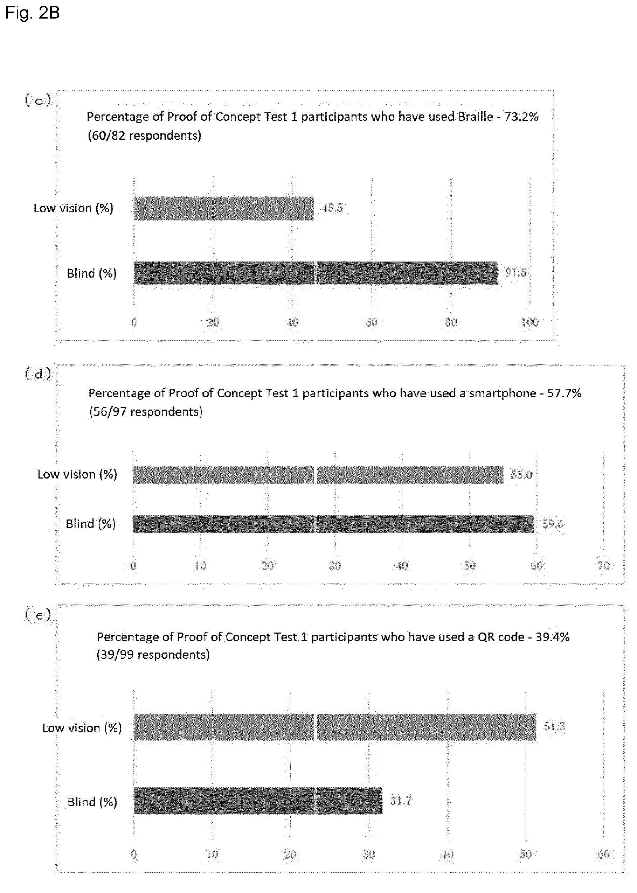

There were 100 visually impaired participants, 64 males and 36 females, with an average age of 55 (mean age of respondents); 60 of the participants were blind and 40 had low vision; and 73.2% (60 out of 82 respondents) used Braille (see Fig. 2A(a)-(b) and Fig. 2B(c)). Figure 2B(c) shows the breakdown of the percentage of Braille users. The necessity of acquiring information by voice can be understood through the particularly small number of Braille users among participants with low vision. In addition, the percentage of people who have used smartphones is 57.7% ( 56 out of 97 respondents), the percentage of people who have used smartphones' voice reading function (VoiceOver or TalkBack) is 46.9% (46 out of 98 respondents), and the percentage of people who have scanned 2D codes is 39.4%. Hence, it can be inferred that visually impaired people already use voice-reading functions and 2D codes with smartphones.

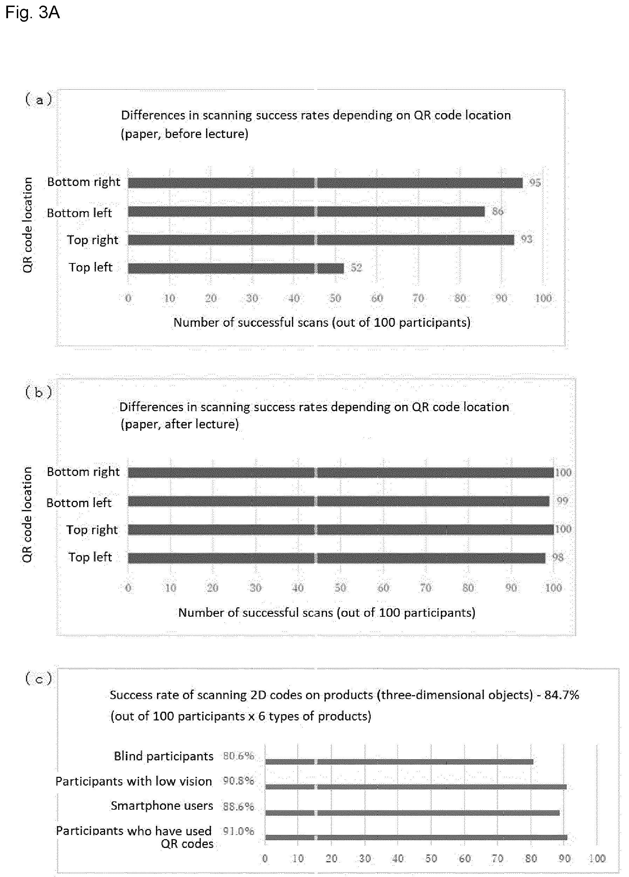

As a result of Test 1, the number of participants out of 100 who succeeded in scanning the 2D code printed on the piece of paper in Fig. 1(1) above within one minute (before instructions were given for this test) at each position was 52 for the upper left position, 93 for the upper right position, 86 for the lower left position, and 95 for the lower right position, as shown in Fig. 3A(a). On the other hand, after receiving instruction, 98 participants were successful in scanning the code when it was in the upper left, 100 in the upper right, 99 in the lower left, and 100 in the lower right, as shown in Figure 3A(b). The reason why the number of successful participants before instruction was given is extremely low for the 2D code in the lower left corner compared to the other data is most likely due to the fact that the very first reading for all participants was for the lower left corner. This was evident by the fact that the number of successful participants for the same "lower left" position greatly improved after participants received instruction, leading to the decision to randomize the order of scanning for comparison in Test 2, described below. In addition, observation of the test showed that among the participants who failed to read the 2D code placed on the left side of the paper, there were cases where some participants covered the 2D code with their left hand while holding their smartphone in their right.

The success rate of 100 people reading 2D codes on six different products (3D objects) purchased from mass retailers, as shown in Fig. 1(2) above, was 84.7% (508 times/600 times), as shown in Fig. 3A(c). The breakdown was 80.6% (290/360 times) for blind people, 90.8% (218/240 times) for people with low vision, 88.6% (298/336 times) for smartphone users, and 91.0% (213/234 times) for people with experience using 2D codes. All the reading tests of 3D objects were conducted after receiving instruction, and it was found that, regardless of the shape of the product, the reading success rate of 3D objects was slightly lower than that of flat printed matter (paper). The difference in the success rate for each profile of the participants demonstrates a higher success rate among those with low vision, and a higher success rate for those who already had experience using smartphones and 2D codes compared to those with no experience. It was thought that the success rate was higher for people with low vision because people with low vision could determine the presence of the 2D code and its location, albeit not perfectly. Additionally, it was thought that the success rate was improved by participants' degree of proficiency in scanning the code, as the success rate was higher for those who had experience using smartphones and 2D codes and also improved after receiving instructions.

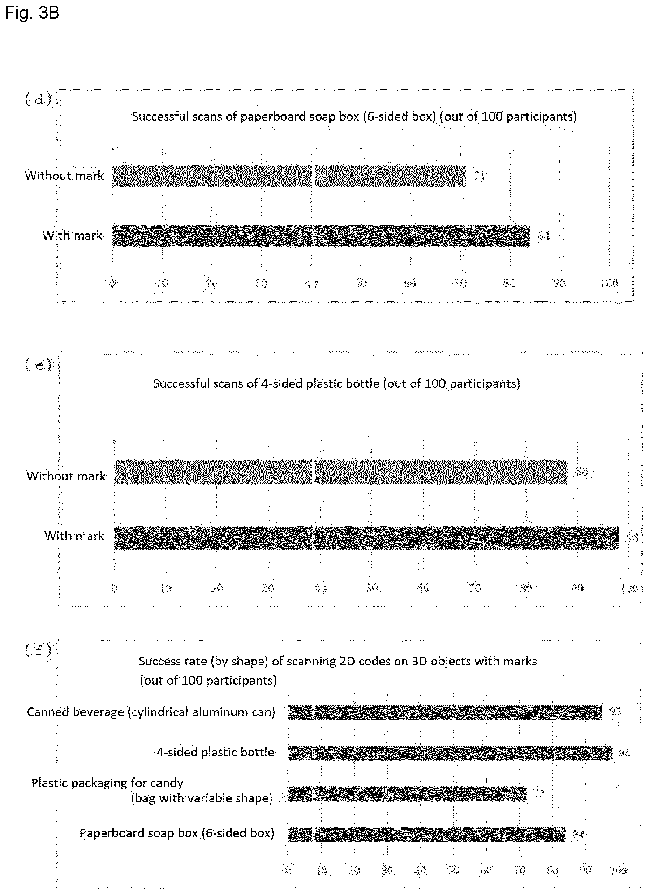

As shown in (d) and (e) of Fig. 3b, a difference of 10 to 13% in success rate was observed in the same 3D object between printing position of the 2D code being marked and being unmarked. For the baby soap (6-sided box) shown in Fig. 1(2), the success rate was 84% (84 out of 100) with a tactile marker and 71% (71 out of 100) without. For aojiru green juice (4-sided PET bottle) shown in Figure 1(2), the success rate was 98% (98 out of 100) with the tactile marker and 88% (88 out of 100) without. Therefore, it was found that the success rate increased when the location of the 2D code could be determined via touch. It was decided to verify exactly what kind of tactile recognition marker was the best to indicate the location of the 2D code in Test 2.

As shown in Fig. 3B(f), the success rate of reading the 2D code placed on various shapes of product packaging depicted in Fig. 1(2) (all with tactile markers around the 2D code) was 84% (84 out of 100) for baby soap (6-sided box), 72% (72 out of 100) for gummy candies (bag, variable shape), 98% (98 out of 100) for aojiru green juice (4-sided plastic bottle), and 95% (95 out of 100) for a canned alcoholic beverage (cylindrical aluminum can). The reading success rate varied by up to 26% depending on the shape of the product (3D object).

In the above Test 1, it was found that it is sufficiently feasible for visually impaired people to read 2D codes with their smartphones, regardless of the degree of their visual impairment. However, it was discovered that increasing the success rate depends on whether or not the presence of a 2D code and its location could be determined tactilely (via touch). It was also found that the reading success seems to be greatly affected by the size of the 2D code and the shape of the printed material. (Since we did not pay attention to the size of the 2D code in Test 1, we decided to make it clear in Test 2.) On the other hand, we learned that if the 2D codes are the same size using the same paper, the position (top or bottom, left or right) of the 2D code on the printed material is insignificant, and success depends more on the degree of proficiency of the actual act of scanning the 2D code. Additionally, through questionnaires and observation of the tests, it was found that although visually impaired people feel very stressed if they cannot scan the 2D code within one minute, even if it takes a long time, they will still try to scan the code if there is information they want to receive. It was also found that information pertaining to groceries and beverages (i.e., 3D objects) was the most wanted day-to-day information for more than half of the total number of participants. Furthermore, it was observed that visually impaired people experienced difficulty in keeping the camera level, and they failed to scan the 2D code because the camera was held too close to the code.

Therefore, in Test 2, we varied both the size of the 2D code and the tactile marker for indicating the code's location, and we made note of both the differences produced by each variation and what setup was suitable for each.

### Proof of Concept Test 2 (conducted from October 1, 2018, to November 2, 2018)

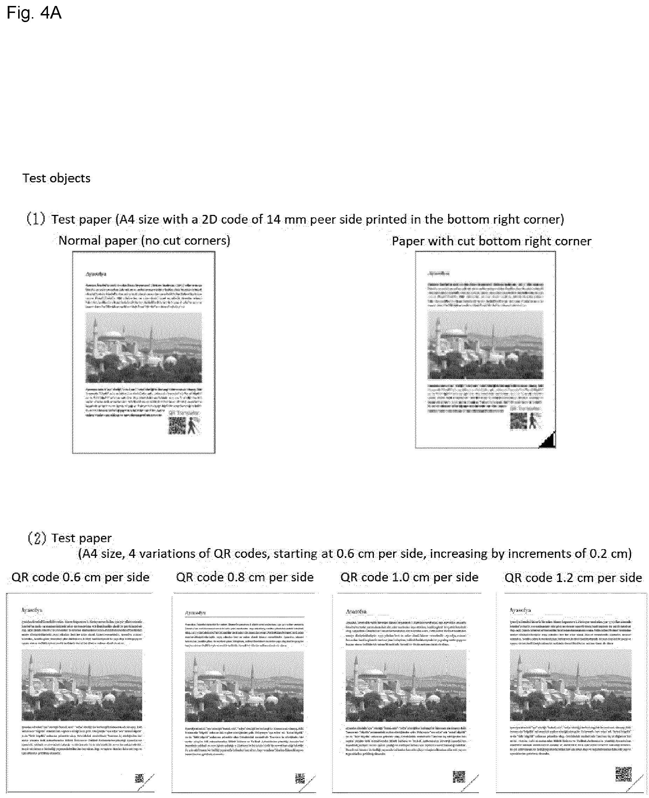

In Test 2, the participants were seated in a well-lit room, as in Test 1, and the same smartphone (2D code reading application) was used to read 2D codes of different sizes with varying tactile markers on the test objects placed on the specified table. The objects used for Test 2 are as follows: a test paper as shown in Fig. 4A(1) (A4 size with a 2D code of 1.4 cm per side printed in the bottom-right corner) without a cutout and a paper (same specifications) with a cutout on the lower right edge; test papers as shown in Fig. 4A(2) (A4 size) with cutouts on the lower right edge and 2D codes of 0.6 cm, 0.8 cm, 1.0 cm, and 1.2 cm printed in the bottom right; and two products (printed product packaging, one rectangular and one cylindrical) as shown in Fig. 4B(3) with 2D codes. The objects used for Test 2 are as follows: a test paper as shown in Fig. 4A(1) (A4 size with a 2D code of 1.4 cm per side printed in the bottom-right corner) without a cutout and a paper (same specifications) with a cutout on the lower right edge; test papers as shown inFig. 4A(2) (A4 size) with cutouts on the lower right edge and 2D codes of 0.6 cm, 0.8 cm, 1.0 cm, and 1.2 cm printed in the bottom right; and two products (product packaging, one rectangular and one cylindrical) as shown in Fig. 4B(3) with 2D codes. In total, eight types of items were prepared according to the way the 2D codes were attached. They are, respectively, rectangular (without mark), rectangular (convex), rectangular (concave), rectangular (with convex points), rectangular (with seal), cylindrical (without mark), cylindrical (with seal), and cylindrical (with convex points).

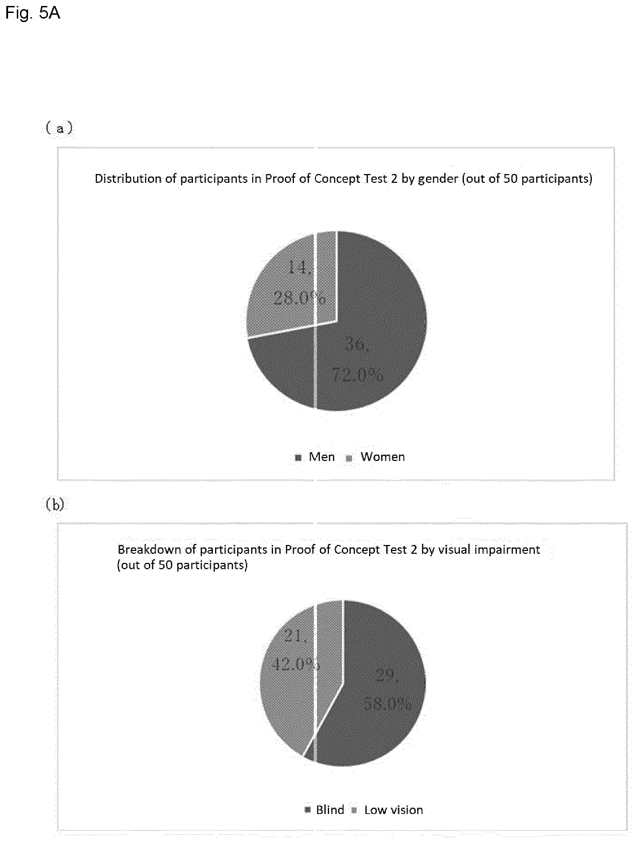

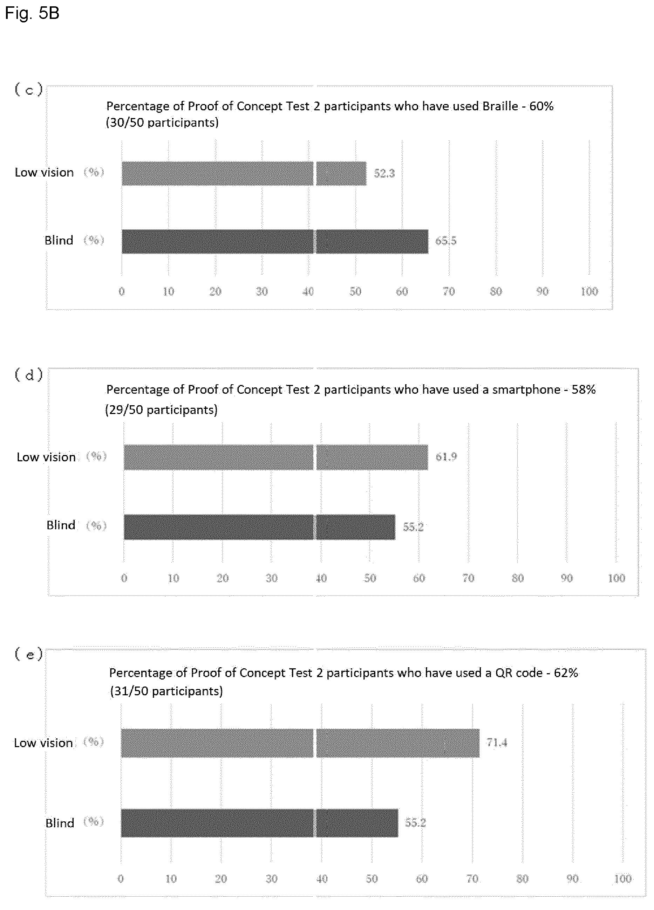

As shown in Fig. 5A(a)-(b), there were 50 visually impaired participants, with 36 males and 14
females, and their average age was 52.9 years. 29 participants were blind and 21 had low vision, and the Braille usage rate was 60.0% (30 people). Figure 5b(c) shows the percentage of Braille users, and, as in Test 1, the percentage of Braille users was low among low-vision participants. As shown in Figure b(d), 58% (29) of the participants had experience using smartphones, 50% (25) had experience using voice reading functions (VoiceOver and TalkBack), and 62% (31) had experience using 2D codes (QR codes), as shown in Figure 5b(e).

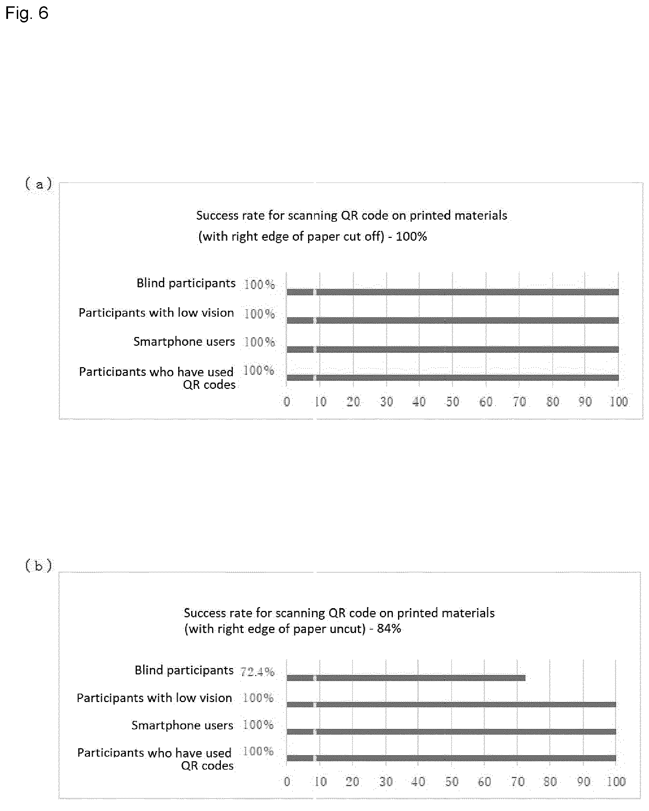

The results of Test 2 showed that the likelihood of participants succeeding in scanning a 14 x 14 mm 2D code located on the bottom-right side of printed material (paper) within one minute, as shown in Fig. 4A (1), with the lower right corner of the paper diagonally cut, was 100% (50/50 participants). A detailed breakdown is shown in Fig. 6(a). The success rate was 100% for totally blind people (29), people with low vision (21), smartphone users (29), and people who had experience using 2D codes (31). The probability that participants successfully scanned the 14 x 14 mm 2D code printed in the bottom-right corner of the printed material (paper) with no diagonal cut within one minute, shown on the left side of Fig. 4A (1) above, was 84% (42/50 participants). The detailed breakdown, as shown in Fig. 6(b), was 72. 4% (21/29) for the totally blind, 100% (21/21) for those with low vision, 100% (29/29) for smartphone users, and 100% (31/31) for those with experience using 2D codes.

The success rate of participants scanning a 2D code within one minute when randomly presented with 2D codes of 0.6 cm, 0.8 cm, 1.0 cm, and 1.2 cm per side printed on the bottom-right side on the test paper (A4 size) shown in Fig. 4A(2) above with the bottom-right corner cut diagonally is shown in Fig. 7(a). The success rates were 48% (24/50) for the 0.6 cm × 0.6 cm 2D code, 82% ( 41/50) for the 0.8 cm × 0.8 cm 2D code, 96% (48/50) for the 1.0 cm × 1.0 cm 2D code, and 100% (50/50) for the 1.2 cm × 1.2 cm 2D code. Therefore, it can be said that statistically favorable results are obtained when a 1.0 cm x 1.0 cm or larger 2D code is printed on the lower right side of the paper, and the lower right edge is diagonally cut.

Furthermore, when participants were randomly presented with different tactile markers attached to the 2D code on the same product (product packaging in a rectangular shape) as shown in Fig. 4B(3) above, the success rate of reading the 2D code within one minute was, as shown in Fig. 7(b), 68% (34/50) for the long rectangular product packaging with no marker on the 2D code, 96% (48/50) for the long rectangular product packaging with a convex tactile marker on the 2D code, 98% (49/50) for the long rectangular product packaging with a concave tactile marker on the 2D code, 96% (48/50) for the long rectangular product packaging with a seal on the 2D code. (48/50), and 96% (48/50) for a long rectangular product packaging with convex points around the 2D code for tactile recognition.

Furthermore, the success rate of reading the 2D code within one minute when the subjects were randomly presented with different tactile markers around the 2D code on the same product (cylindrical product packaging) in Figure 4B(3) above was, as shown in Figure 7 (c), 58% (29/50) for the cylindrical beverage can without any markings around the 2D code, 90% (45/50) for the cylindrical beverage can with a seal attached to the 2D code, and 86% (43/50) for the cylindrical beverage can with convex points around the 2D code.

From the examples in Fig. 7(b) and (c), we determined that the presence or absence of a tactile marker are important for the reading success rate for visually impaired people, that differences in the tactile marker do not significantly affect the code reading success rate, and that the type of tactile marker should be determined by factors such as ease of manufacture and prevention of confusion with other tactile features.

The results of Test 2 stated above are one step ahead of the results of Test 1, and it was found that in order for a visually impaired person to successfully read the 2D code with their smartphone, ideally the 2D code should be a certain size or larger. Specifically, the 2D code should be 10 mm x 10 mm or larger. Additionally, it was found that it was most important to attach a marker to the 2D code for tactile recognition.

An example of an ideal 2D code for visually impaired people which takes into account the results of the two tests is described below.

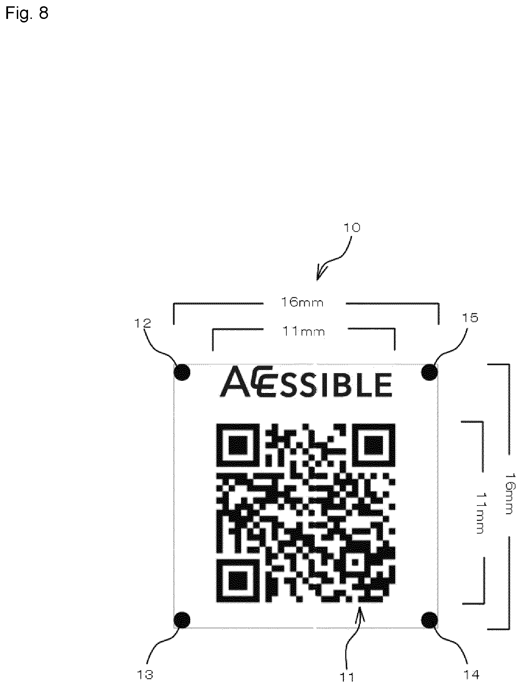

Example of the present invention: a 2D code for visually impaired people Figure 8 illustrates the present invention's 2D code (10) for visually impaired people. This 2D code (10) for visually impaired people has a data matrix 2D code (11) and Braille-like convex points (12-15) at the four corners around the code. From the above-mentioned tests, a tactile marker for the 2D code (11) is necessary, and, even in the case of product packaging, it is easy to form convex points by using a press, etc., at the same time as the printing of the product's usual explanations, its design, and the 2D code (11).

In the example of Fig. 8, the 2D code (11) is 11 mm x 11 mm, and the distance between each of the convex points 12 to 15 around the code (distance between convex points 12 and 13; distance between convex points 13 and 14; distance between convex points 14 and 15; and distance between convex points 12 and 15) is 16 mm. The reason for this is that, first of all, the success rate of reading a 2D code within one minute is high within the range of 10 x 10 mm to 14 x 14 mm as demonstrated in the tests, hence it is ideal to print 2D codes within that range. Since there have been no empirical tests on 2D codes larger than 14 x 14 mm, code size can at least be stated as effective up to a size of 14 x 14 mm, but the degree of reading success is usually considered to be higher for larger codes. Therefore, the success rate should be thought of as something that changes relative to available excess printing space.

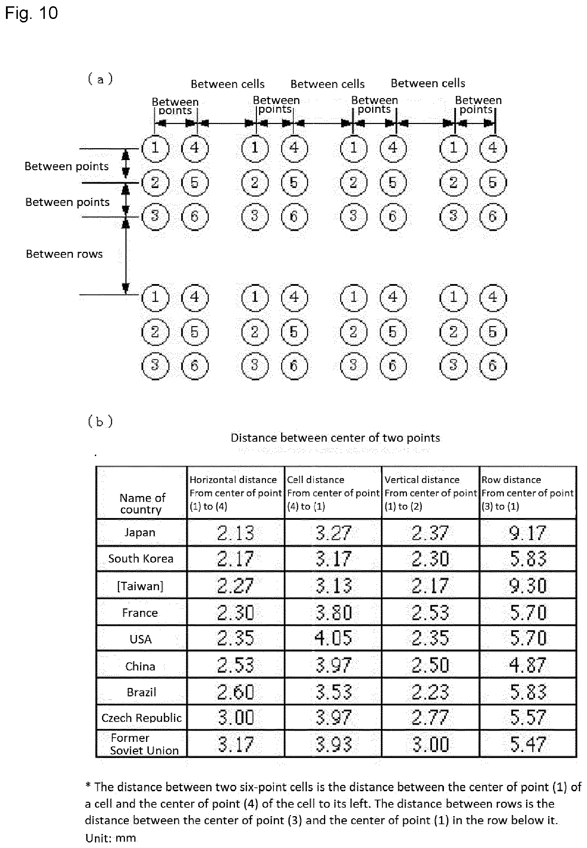

The distance from center to center of Braille raised dots is explained here, with reference to Fig. 10. As shown in (a), a Braille cell is essentially composed of six raised dots (two parallel columns of three raised dots per column). These cells are lined up from left to right in rows, and the spaces between rows are called line spacing. The side with the raised dot is called the "front" of Braille, and it is read tactilely with the fingertips from left to right. The center-to-center distances between dots in each country's Braille system are shown in (b). From these results, it can be seen that if the line spacing is about 12 mm, which is much larger than the Taiwanese line spacing of 9.30 mm, visually impaired people will recognize that the raised dots are not Braille but something different. Therefore, the distance from center to center of the convex points 12-15 should be 12 mm or greater. In the example given in Fig. 8, the distance is 16 mm.

In addition, the 2D code reading success rate decreases if the surface is uneven. On the other hand, the base diameter size of a typical Braille raised dot is Φ = 1.4 to 1.5 mm (height h = 0.3 to 0.5 mm). Therefore, in consideration of misalignment or shadows of the convex points (12-15), the result of when a special printing machine is not used, it is preferable to separate the convex points (12-15) from the 2D code by about 2 mm and make the distance from center to center of the convex points (12-15) at least 14.0 mm. In the example shown in Fig. 8, the distance is 16 mm for the sake of certainty. (However, this is the distance between the outer edges of the convex points (12-15); the distance from center to center is less than 16 mm).

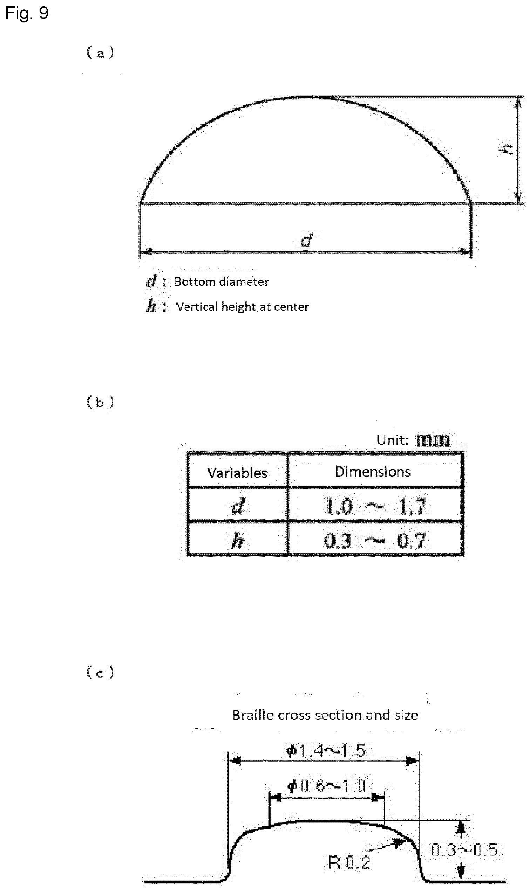

Next, Fig. 9(a) shows a schematic illustration of the cross-section of each of the convex points 12-15, and Fig. 9(b) shows their dimensions. The cross-sectional of a convex point 12-15 is half-dome shaped, with the diameter of the bottom surface d (Φ) equal to 1.0-1.7 mm, and the vertical height of the center of the point h equal to 0.3-0.7 mm. From above, if there is no issue with precision, misalignment or damage, it is a regular circle. The cross-section of a generic Braille raised dot is shown in Fig. 9(c). The convex points 12-15 are roughly the same size as those of normal Braille. However, as shown in Fig. 9(c), the general shape of Braille is more like the bottom of an upside-down pan, as shown in (c), than a half-dome shape, and there are many examples of where the base (hereinafter also referred to as the "foothills") rises up to form a gentle half-dome shape at the top. Braille must not damage the fingertips of visually impaired people. Convex points (12-15), while needing to satisfy this requirement, must also be easy to produce on a generic product packaging production line (via pressing, etc.) rather than with a specialized Braille production machine. In addition to this, it is necessary to prevent the shadows of the convex points (12-15) from overlapping with the 2D code (11). Combining these considerations leads to a half-dome shape as shown in the examples in Figs. 9(a)-(b).

It should be noted as a result of Test 2 that a concave area can also work well as a tactile marker on product packaging (3D objects) for visually impaired people as an alternative to convex points (12-15). In the case that a concave area is used, the 2D code (11) is contained within the bottom of a concave area on the product packaging, as shown in Fig. 4(3) (with concave area).

### Explanation of the Signs

10... 2D code for visually impaired people
11... 2D code
12 to 15... Convex points

## Claims

1. A packaging for a consumer product upon which an identification code (10) for the visually impaired people is printed on the surface, to help the visually impaired people understand the information of the product handheld by the visually impaired people,
wherein the identification code (10) to lead the information of the product comprises:
a 2D code (11) that is readable by a mobile device having a camera, and is displayed on the surface of the product packaging;
Braille-like convex points (12-15) at four corners around the 2D code (11); and
a recess having a square-shaped bottom surface allocated on the product packaging as a marker for allowing the visually impaired people to know the location of the 2D code (11);
the 2D code (11) is a square-shape whose whole displayed on the bottom surface of the recess and is 10 mm to 14 mm square and the distance from center to center of each convex point is 14 mm to 18 mm and each side of the bottom surface of the recess has a size that does not overlap the 2D code (11).

## Patentansprüche

1. Verpackung für ein Verbraucherprodukt, auf deren Oberfläche ein Identifikationscode (10) für sehbehinderte Personen aufgedruckt ist, um den sehbehinderten Personen zu helfen, die Informationen des von den sehbehinderten Personen gehaltenen Produkts zu verstehen,
wobei der Identifikationscode (10) zur Weiterleitung der Informationen des Produkts umfasst:
einen 2D-Code (11), der von einem mobilen Gerät, das eine Kamera aufweist, lesbar ist und auf der Oberfläche der Produktverpackung angezeigt ist;
brailleähnliche erhabene Punkte (12-15) an vier Ecken um den 2D-Code (11) herum; und
eine Vertiefung mit einer quadratisch geformten Bodenfläche, die auf der Produktverpackung angeordnet ist als Markierung, um den sehbehinderten Personen zu ermöglichen, die Position des 2D-Codes (11) zu erkennen;
der 2D-Code (11) eine quadratische Form aufweist, deren Gesamtheit auf der Bodenfläche der Vertiefung angezeigt ist, und 10 mm bis 14 mm quadratisch ist, und der Abstand von Mittelpunkt zu Mittelpunkt jedes erhabenen Punktes 14 mm bis 18 mm beträgt, und jede Seite der Bodenfläche der Vertiefung eine Größe aufweist, die den 2D-Code (11) nicht überlappt.

## Revendications

1. Emballage pour un produit de consommation, sur la surface duquel un code d'identification (10) destiné aux personnes malvoyantes est imprimé, afin d'aider les personnes malvoyantes à comprendre les informations du produit tenu par les personnes malvoyantes,
dans lequel le code d'identification (10) destiné à la transmission des informations du produit comprend :
un code 2D (11) qui est lisible par un appareil mobile comportant une caméra et qui est représenté sur la surface de l'emballage du produit ;
des points convexes de type braille (12-15) aux quatre coins autour du code 2D (11) ; et
un creux ayant une surface de fond de forme carrée, disposé sur l'emballage du produit en tant que repère permettant aux personnes malvoyantes de connaître l'emplacement du code 2D (11) ;
le code 2D (11) est de forme carrée, dont l'ensemble est représenté sur la surface de fond du creux, et est carré de 10 mm à 14 mm, et la distance de centre à centre de chaque point convexe est de 14 mm à 18 mm, et chaque côté de la surface de fond du creux a une dimension qui ne chevauche pas le code 2D (11).
